# EUROPEAN PATENT SPECIFICATION

(11) **EP 3 532 437 B1**
(45) Date of publication and mention of the grant of the patent: **22.11.2023**
(21) Application number: 17863891.2
(22) Date of filing: 26.10.2017
(51) Int. Cl.: C02F 1/52, E03F 5/14, C02F 1/00, C02F 1/66, B01D 61/58, C02F 101/16, C02F 101/12, C02F 1/44, C02F 1/28, B01D 61/12, B01D 61/02, B01D 61/10

(54) **BYPASS FOR HIGH DEMAND PERIODS FOR WATER PURIFICATION SYSTEM**
BYPASS FÜR HOHE ANFORDERUNGSZEITEN FÜR EIN WASSERREINIGUNGSSYSTEM
COURT-CIRCUITAGE PAR DÉRIVATION EN PÉRIODES DE FORTE DEMANDE POUR SYSTÈME DE PURIFICATION D'EAU

(30) Priority: 25.10.2016 US 201662412795 P; 25.10.2017 US 201715792913
(43) Date of publication of application: 04.09.2019
(73) Proprietor: DS Services of America, Inc., Atlanta, Georgia 30339 (US)
(72) Inventor: BURROWS, Bruce D., Valencia, California 91355 (US)
(74) Representative: Banzer, Hans-Jörg
(86) International application number: PCT/US2017/058430
(87) International publication number: WO 2018/081359

(56) References cited:
- CN-U- 203 683 247
- KR-B1- 100 945 516
- US-A- 4 784 763
- US-A- 4 975 199
- US-A1- 2005 171 501
- US-A1- 2005 171 501
- US-A1- 2010 292 844
- US-A1- 2015 166 385

## Description

### CROSS-REFERENCE TO RELATED APPLICATION

This application claims the benefit of U.S. Patent Application Serial No. 15/792,913 filed on October 25, 2017, which claims priority to U.S. Provisional Application Serial No. 62/412,795 filed on October 25, 2016.

### BACKGROUND

### Field

Aspects of the present disclosure generally relate to apparatuses and methods for water purification. More specifically, the present disclosure relates to apparatuses configured with a bypass conduit for use during high demand periods in water purification systems.

### Background

Water is necessary for human existence. In many parts of the world, clean drinking water is difficult to obtain. Many different types of water purification systems and methods have been employed to produce clean drinking water throughout the world.

Although many municipal water systems provide clean and/or purified drinking water, filtration systems have become popular in many offices and homes. These filtration systems often employ a filter of particulates contained within an in-line canister to trap, adsorb, and/or otherwise remove certain chemicals and/or other dissolved solids from the incoming water stream. These filters may employ carbon, activated carbon, or other materials to adsorb, catalyze, and/or otherwise treat the incoming water. Filtration systems may also optionally employ a reverse osmosis filter, either in addition to the particulate filter or instead of the particulate filter, to purify an incoming water supply.

In some filtration systems, a reservoir of purified water may be present to store purified water for on-demand use. Reverse osmosis systems may only generate one gallon of purified water per hour, and as such, a reservoir of purified water may be useful to allow for periods of heavy demand. However, once the reservoir is emptied, the water purification system may not be able to provide purified water for an extended period of time.
A system for purifying water according to the state of the art is known, for instance, from document US 2010/292844 A1.

### SUMMARY

The present disclosure describes a water purification system that allows for a bypass of one or more stages of water purification. During periods of high demand, the bypass may allow water to be delivered without passing through all of the stages of the water purification system. According to the invention, 2. the purification system comprises a first filter comprising a particulate filter, and having an inlet and an outlet, and a second filter comprising a reverse osmosis filter, and having an inlet and at least a first outlet. A reservoir holds fluid, such as water, the reservoir having an inlet and an outlet. A bypass valve is positioned between the outlet of the first filter, the inlet of the second filter and the inlet of the reservoir. The bypass valve has a first position wherein the bypass valve provides fluid communication between the outlet of the first filter and the inlet of the second filter, and the bypass valve has a second position wherein the bypass valve provides fluid communication between the outlet of the first filter and the inlet of the reservoir, bypassing the inlet of the second filter. A controller controls position of the bypass valve between at least the first position and the second position.

The fluid purification system further comprises a level sensor in communication with the controller and wherein level sensor information provided to the controller determines whether the bypass valve is in the first position or the second position. Further, the fluid purification system further comprises a particulate sensor in communication with the controller and particulate sensor information provided to the controller determines whether the bypass valve is in the first position or the second position.

The above summary has outlined, rather broadly, some features and technical advantages of the present disclosure in order that the detailed description that follows may be better understood. Additional features and advantages of the disclosure will be described below. It should be appreciated by those skilled in the art that this disclosure may be readily utilized as a basis for modifying or designing other structures for carrying out the same purposes of the present disclosure. The novel features, which are believed to be characteristic of the disclosure, both as to its organization and method of operation, together with further objects and advantages, will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

For a more complete understanding of the present disclosure, reference is now made to the following description taken in conjunction with the accompanying drawings.
FIG. 1 illustrates a block diagram of a water purification system in accordance with an aspect of the present disclosure; and
FIG. 2A illustrates a reservoir in accordance with an aspect of the present disclosure.
FIG. 2B illustrates an embodiment of a reservoir in accordance with an aspect of the present disclosure, incorporating a particulate sensor interacting with a controller to control actuation of a bypass valve.
FIG. 3 illustrates a block diagram of bypass valve control in the embodiment of FIG. 2B.
FIG. 4 illustrates a flow diagram for operation of the controller of FIG. 2B reservoir in accordance with an aspect of the present disclosure.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. It will be apparent to those skilled in the art, however, that these concepts may be practiced without these specific details. In some instances, well-known structures and components are shown in block diagram form in order to avoid obscuring such concepts. As described herein, the use of the term "and/or" is intended to represent an "inclusive OR", and the use of the term "or" is intended to represent an "exclusive OR".

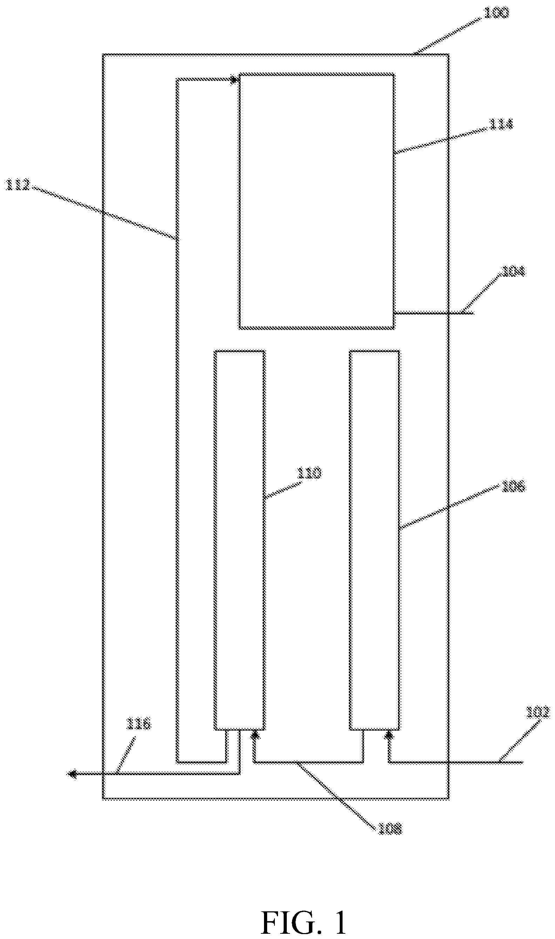

FIG. 1 illustrates a block diagram of a water purification system in accordance with an aspect of the present disclosure. System 100 comprises an inlet line 102 and an outlet 104. Inlet line 102 may be coupled to filter 106, which is coupled by line 108 to filter 110. Filter 110 is coupled by line 112 to reservoir 114. Filter 110 also may have a brine (drain) line 116.

Inlet line 102 may be a pipe and/or other connection to a municipal water supply. Outlet 104 may be a faucet, spigot, tap, and/or other selectively controllable valve to permit the flow of fluid from reservoir 114. Inlet line 102, line 108, and line 112 may be conduits, tubes, and/or other piping to connect the various components within system 100. Other components may also be included in system 100 without departing from the scope of the present disclosure. Such optional additional components may include compressors, heating elements, valves, controllers, etc., depending on the complexity and application of system 100 in a particular environment.

Filter 106 is a particulate filter. For example, and not by way of limitation, filter 106 may remove particulates, e.g., dirt, sand, etc., from the fluid flowing into system 100 from the inlet line 102. Filter 106 may additionally remove dissolved solids from the fluid flowing into system 100 from the inlet line 102. For example, and not by way of limitation, filter 106 may comprise carbon particles that remove chlorine and chloramines from the fluid flowing in inlet line 102 via adsorption. Additives may be placed within filter 106 to catalyze certain dissolved solids from the fluid flowing into system 100. Other chemical, electrical, and/or mechanical methods may be employed within filter 106 to remove solids and/or dissolved solids from the fluid entering system 100 via inlet line 102 without departing from the scope of the present disclosure.

Filter 110 is a reverse osmosis filter. A reverse osmosis filter removes other dissolved solids from the fluid in the inlet line 102 by passing the fluid through a porous membrane. When the pressure passing the fluid through the membrane (the hydrostatic pressure) is greater than the pressure required for particles to flow through the membrane (the osmotic pressure), the dissolved solids pass through the membrane in a "reverse" direction away from the fluid flow.

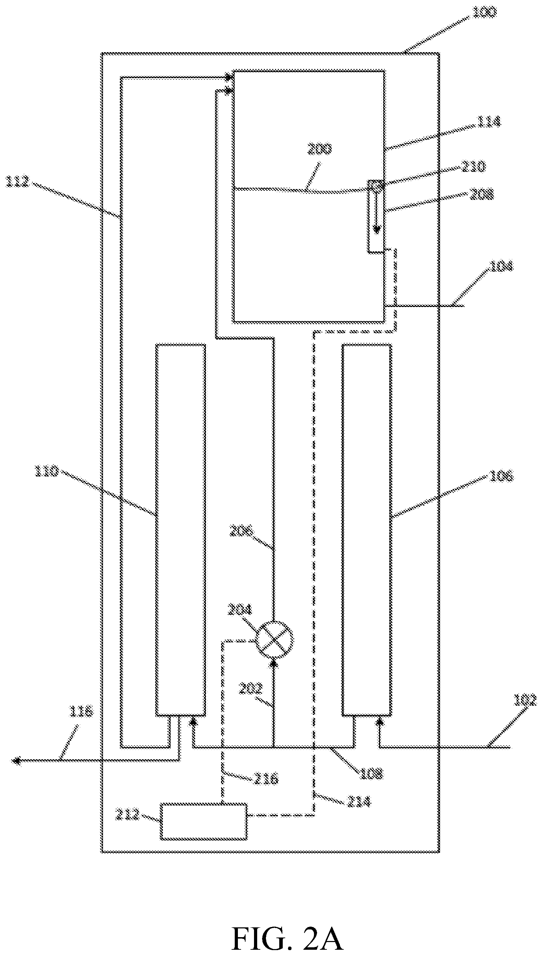

FIG. 2A illustrates a reservoir in accordance with an aspect of the present disclosure. Under periods of high demand, the fluid 200 level in reservoir 114 may fall to a level where no fluid 200 remains in reservoir 114. According to the invention, system 100 includes a bypass conduit 202 that is coupled to a valve 204, which delivers fluid that has passed through filter 106 to conduit 206, bypassing filter 110. Conduit 206 delivers this fluid to reservoir 114.

To control valve 204, which may be a solenoid valve, a switch 208, with a float 210 is coupled to a controller 212 by control line(s) 214. Controller 212 is also coupled to valve 204 by control line(s) 216. When switch 208 changes state (e.g., from open to closed or from closed to open), controller opens valve 204 to allow fluid to flow through conduits 202 and 206. Because filter 106, which is a filter that removes particulates and may additionally remove some dissolved solids, can produce purified water faster than filter 110, which is a reverse osmosis filter, the water passing through conduits 202 and 206 can be delivered to output 104 during periods of high demand.

Switch 208 may be mounted anywhere on or in reservoir 114, and may measure the fluid 200 level in reservoir 114 in any number of ways. For example, and not by way of limitation, switch 208 may be an optical switch, with a transmitter and receiver, and change state when fluid 200 level drops to a certain predetermined level within reservoir 114. Switch 208 may be a float switch, reed relay, or any type of switch or device that can change state based on the level of fluid 200 in reservoir 114 without departing from the scope of the present disclosure.

Controller 212 may control valve 204 by time, e.g., may only open valve 204 for a certain amount of time. Controller 212 may control valve 204 by switch 208, e.g., open valve 204 when switch 208 is in one state (e.g. when float 210 reaches the bottom of switch 208) and close valve 204 when switch 208 is in another state (e.g., when float 210 reaches the top of switch 208). Controller 212 may combine control methods and/or devices to control when valve 204 is open and when valve 204 is closed. Any combination of controls for valve 204 are possible within the scope of the present disclosure.

In regards to the reservoir water level indicator 208 / 210, it should be noted that a variety of different sensors and techniques can be used to measure the relative amount of water left in the reservoir. In one instance a load cell may be used to determine the percent volume of water left in the reservoir based on the relative weight of the remaining fluid. In other embodiments simple sensors such as Infrared emitters and receivers or Ultrasonic emitters and receivers may be used to accurately determine the amount of water left in a reservoir. In a separate embodiment, without using any sensors for the water level indicator, the weight of the water in the reservoir can be used to hold closed the bypass valve which will open when the amount of water in the reservoir falls below a certain threshold value indicating that there is not enough water to hold the valve closed.

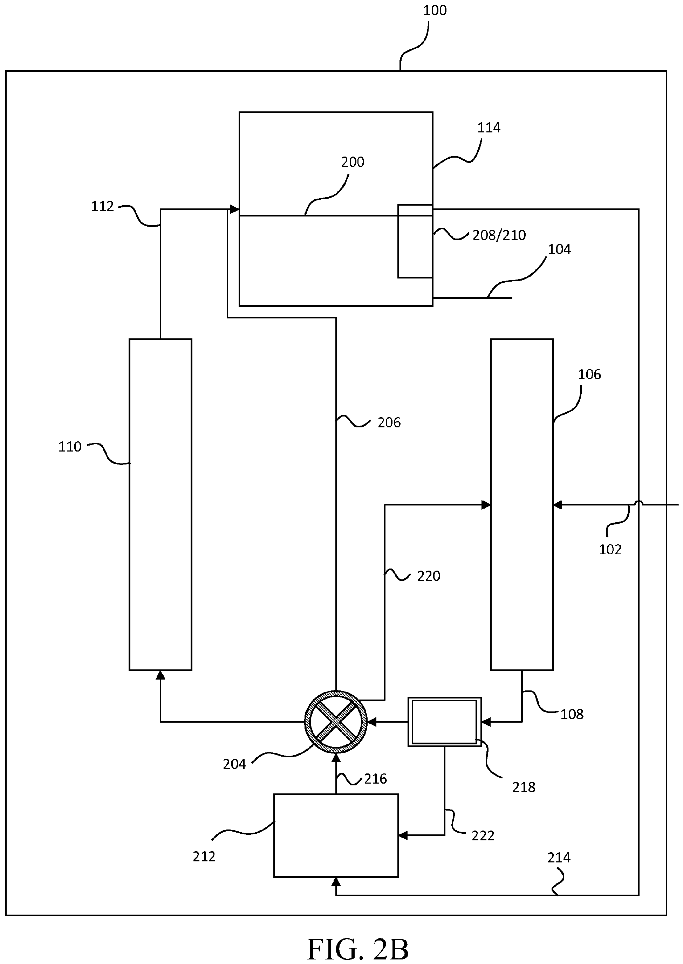

In another embodiment of the invention, illustrated in FIG. 2B, the controller 212 can be configured for different operational cases. A feedback line 220 is implemented that will feed the water back into the particle filter 106 in the event that a particulate sensor 218 returns an unacceptable reading to the controller 212 of opacity for the water, or in the event that further first stage filtering is desired as an alternative to second stage filtering. According to the invention, the 2. controller 212 will be able to control three states of the bypass valve 204 activating it to open, remain closed, or feedback the water. Accordingly, water may be filtered through the particle filter 106 one or more times, as a function of the level of particles in the water output from the particle filter 106, such that the water can be filtered in high demand situations primarily by the particle filter rather than a stage of filtering through the RO filter 110 (e.g. so as to avoid the delay of filtration by the RO filter required to keep the reservoir 114 filled to an acceptable/useful level).

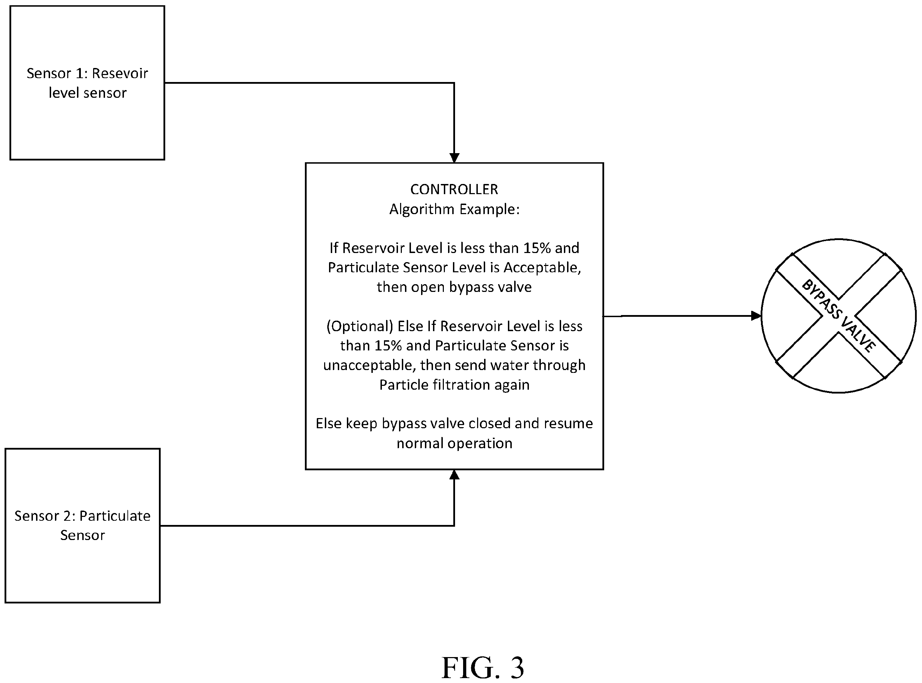

Fig. 3 illustrates a block diagram of the embodiment of FIG. 2B. As illustrated, a first sensor, a reservoir level sensor, is in communication with the controller 212. Similarly, a second sensor, a particulate sensor (or multi-parameter water quality monitor) as known in the art, is in communication with the controller 212. For example, the first and second sensors may be in digital or analog electronic communication (wired or wireless) with the controller 212. The controller 212 may be programmed or configured to perform an algorithm or steps of operation that monitor the level of the fluid in the reservoir and monitor a parameter of the fluid in the reservoir (such as opacity or particle count). If the reservoir level is less than a specified amount or within a range, then the controller 212 may open the bypass valve 204 and route fluid to the reservoir rather than to the RO filter 110.

Optionally or alternatively, if the fluid level is less than a specified level (which may be different from the level for determining routing to the reservoir (i.e. bypassing RO filtration), the controller may control the valve 204 to route fluid back through the particulate filter 106 (e.g. for multiple passes of particulate filtration that may take less time to restore appropriate levels in the reservoir than would RO filtration). Otherwise, the bypass valve 204 will route fluid in the normal path of operation, i.e. from the particle filtration to the RO filtration to the reservoir. The controller may also, as a function of particulate level, shut the system down so there is no further flow to the reservoir, for example if particulate levels are at an unacceptably high level.

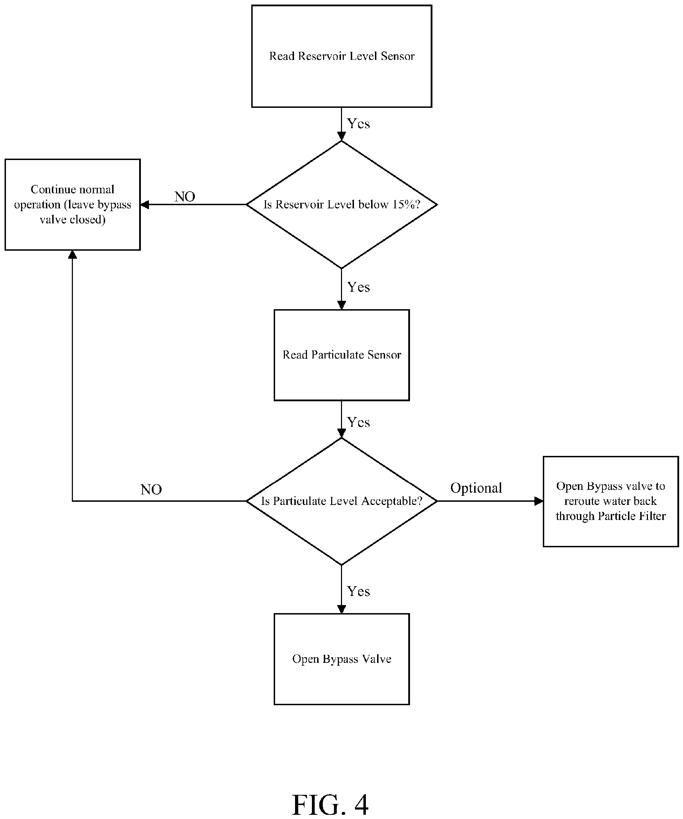

Fig. 4 provides an illustrative algorithm that may be implemented in software code for implementation with the controller 212 in the embodiment of FIGS. 2B and 3. In the illustrated process, the reservoir level is monitored. As long as the reservoir level is at an acceptable level, normal 2-stage operation continues. Particulate level is monitored and as long as the reservoir level is acceptable and particulate level is such that 2-stage filtering is desirable then normal 2-stage operation may continue. If the reservoir level is below a selected threshold (or within a range), fluid may be either routed directly to the reservoir via the bypass valve in order to restore fluid level or it may be routed via the feedback path for first-stage, particulate filtering (one or more times). Particulate level may be monitored such that in the case where reservoir level is unacceptable, particulate level will be used to determine whether fluid is routed directly to the reservoir or feedback for further first stage filtering. It should be noted that the levels illustrated in the figures are illustrative and do not necessarily reflect operating parameters or the limitations of the present invention.

The memory of controller 212, which may be internal memory and/or external memory, may be implemented in firmware and/or software implementation. The firmware and/or software implementation methodologies may be implemented with modules (e.g., procedures, functions, and so on) that perform the functions described herein. A machine-readable medium tangibly embodying instructions may be used in implementing the methodologies described herein. For example, software codes may be stored in a memory and executed by a processor unit (e.g., controller 212). Memory may be implemented within the processor unit or external to the processor unit. As used herein, the term "memory" refers to types of long term, short term, volatile, nonvolatile, or other memory and is not to be limited to a particular type of memory or number of memories, or type of media upon which memory is stored.

If implemented in firmware and/or software, the functions may be stored as one or more instructions or code on a computer-readable medium. Examples include computer-readable media encoded with a data structure and computer-readable media encoded with a computer program. Computer-readable media includes physical computer storage media. A storage medium may be an available medium that can be accessed by a computer. By way of example, and not limitation, such computer-readable media can include RAM, ROM, EEPROM, CD-ROM or other optical disk storage, magnetic disk storage or other magnetic storage devices, or other medium that can be used to store desired program code in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

In addition to storage on computer readable medium, instructions and/or data may be provided as signals on transmission media included in a communication apparatus. For example, a communication apparatus may include a transceiver having signals indicative of instructions and data. The instructions and data are configured to cause one or more processors to implement the functions outlined in the claims.

Although the present disclosure and its advantages have been described in detail, it should be understood that various changes, substitutions and alterations can be made herein without departing from the technology of the disclosure as defined by the appended claims. For example, relational terms, such as "above" and "below" are used with respect to components. Of course, if the component is inverted, above becomes below, and vice versa. Additionally, if oriented sideways, above and below may refer to sides of a component. Moreover, the scope of the present application is not intended to be limited to the particular configurations of the process, machine, manufacture, composition of matter, means, methods and steps described in the specification. As one of ordinary skill in the art will readily appreciate from the disclosure, processes, machines, manufacture, compositions of matter, means, methods, or steps, presently existing or later to be developed that perform substantially the same function or achieve substantially the same result as the corresponding configurations described herein may be utilized according to the present disclosure.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, multiple microprocessors, one or more microprocessors in conjunction with a DSP core, or any other such configuration.

The steps of a method or algorithm described in connection with the disclosure may be embodied directly in hardware, in a software module executed by a processor, or in a combination of the two. A software module may reside in RAM, flash memory, ROM, EPROM, EEPROM, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can include RAM, ROM, EEPROM, CD-ROM or other optical disk storage, magnetic disk storage or other magnetic storage devices, or any other medium that can be used to carry or store specified program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

The description of the disclosure is provided to enable any person skilled in the art to make or use the disclosure. Various modifications to the disclosure will be readily apparent to those skilled in the art.

## Claims

1. A fluid purification system (100) comprising:
a first filter (106) comprising a particulate filter, and having an inlet and an outlet;
a second filter (110) comprising a reverse osmosis filter, and having an inlet and at least a first outlet;
a reservoir (114) to hold fluid, the reservoir (114) having an inlet and an outlet;
a bypass valve (204) positioned between the outlet of the first filter (106), the inlet of the second filter (110) and the inlet of the reservoir (114), and having a first position wherein the bypass valve (204) provides fluid communication between the outlet of the first filter (106) and the inlet of the second filter (110), and having a second position wherein the bypass valve (204) provides fluid communication between the outlet of the first filter (106) and the inlet of the reservoir (114), bypassing the inlet of the second filter (110); and
a controller (212) controlling position of the bypass valve (204) between at least the first position and the second position;
a level sensor (208, 210) mounted on or in the reservoir (114) and configured to measure a level of the fluid in the reservoir (11), wherein the level sensor (208, 210) is in communication with the controller (212) and
**characterized in that**
level sensor information provided by the level sensor (208, 210) to the controller (212) determines whether the bypass valve (204) is in the first position or the second position,
wherein the controller (212) is configured to control the position of the bypass valve (204) to the second position if the level sensor information indicates a drop of the level of the fluid to a predetermined level in the reservoir (11) and otherwise control the position of the bypass valve (204) to the first position and by
a particulate sensor (218) in communication with the controller (212),
wherein the particulate sensor (218) is configured to monitor a particulate level in the fluid at the outlet of the first filter (106) and wherein particulate sensor information provided by the particulate sensor (218) to the controller (212) in addition to the level sensor information determines whether the bypass valve (204) is in the first position or the second position,
wherein the controller (212) is configured to control the position of the bypass valve (204) to the second position if the level sensor information indicates a drop of the level of the fluid to a predetermined level in the reservoir (11) only if in addition the particulate sensor information indicates an acceptable particulate level in the fluid at the output of the first filter (106), and by
a feedback path (220) from the bypass valve (204) to the first filter (106),
wherein the bypass valve (204) has a third position wherein the bypass valve (204) provides fluid communication between the outlet of the first filter (106) and the feedback path (220) to the first filter (106),
wherein the controller (212) is configured to control the position of the bypass valve (204) to the third position if the level sensor information indicates a drop of the level of the fluid to the predetermined level in the reservoir (11) and the particulate sensor information indicates an unacceptable particulate level in the fluid at the output of the first filter (106).

2. The fluid purification system (100) of claim 1, wherein the outlet of the reservoir (114) comprises a faucet, spigot, tap, or other valve that controllably permits a flow of the fluid from the reservoir (114).

3. The fluid purification system (100) of any of claims 1 to 2, the second filter (110) having a second outlet (116) via which brine exits the reverse osmosis filter.

4. The fluid purification system (100) of any of claims 1 to 3, wherein the particulate filter comprises carbon particles to remove chlorine and chloramines from the fluid by adsorption, and an additive to remove dissolved solids from the fluid, and
wherein the reverse osmosis filter comprises a porous membrane through which fluid pass from the inlet of the second filter (110) to the outlet of the second filter (110).

5. The fluid purification system (100) of any of claims 1 to 4, wherein the fluid is water.

## Patentansprüche

1. Fluidreinigungssystem (100), umfassend:
einen ersten Filter (106), der einen Partikelfilter umfasst und einen Einlass und
einen Auslass aufweist;
einen zweiten Filter (110), der einen Umkehrosmosefilter umfasst und einen Einlass und mindestens einen ersten Auslass aufweist;
einen Vorratsbehälter (114), um Fluid vorzuhalten, wobei der Vorratsbehälter (114) einen Einlass und einen Auslass aufweist;
ein Umgehungsventil (204), das zwischen dem Auslass des ersten Filters (106), dem Einlass des zweiten Filters (110) und dem Einlass des Vorratsbehälters (114) angeordnet ist und eine erste Position aufweist, in der das Umgehungsventil (204) eine Fluidverbindung zwischen dem Auslass des ersten Filters (106) und dem Einlass des zweiten Filters (110) herstellt, und eine zweite Position aufweist, in der das Umgehungsventil (204) eine Fluidverbindung zwischen dem Auslass des ersten Filters (106) und dem Einlass des Vorratsbehälters (114) herstellt, wobei der Einlass des zweiten Filters (110) umgangen wird; und
eine Steuerung (212), die die Position des Umgehungsventils (204) zwischen zumindest der ersten Position und der zweiten Position steuert;
einen Pegelsensor (208, 210), der an oder in dem Vorratsbehälter (114) angebracht ist und ausgestaltet ist, um einen Pegel des Fluids in dem Vorratsbehälter (11) zu messen, wobei der Pegelsensor (208, 210) mit der Steuerung (212) in Verbindung steht, und
**dadurch gekennzeichnet, dass**
eine Pegelsensorinformation, die von dem Pegelsensor (208, 210) an die Steuerung (212) geliefert wird, bestimmt, ob das Umgehungsventil (204) in der ersten Position oder in der zweiten Position ist,
wobei die Steuerung (212) ausgestaltet ist, die Position des Umgehungsventils (204) in die zweite Position zu steuern, wenn die Pegelsensorinformation einen Abfall des Pegels des Fluids auf einen vorbestimmten Pegel in dem Vorratsbehälter (11) anzeigt, und andernfalls die Position des Umgehungsventils (204) in die erste Position zu steuern, und durch
einen Partikelsensor (218) in Verbindung mit der Steuerung (212),
wobei der Partikelsensor (218) ausgestaltet ist, einen Partikelpegel in dem Fluid an dem Auslass des ersten Filters (106) zu überwachen, und wobei eine Partikelsensorinformation, die von dem Partikelsensor (218) an die Steuerung (212) zusätzlich zu der Pegelsensorinformation geliefert wird, bestimmt, ob das Umgehungsventil (204) in der ersten Position oder in der zweiten Position ist,
wobei die Steuerung (212) ausgestaltet ist, die Position des Umgehungsventils (204) nur dann in die zweite Position zu steuern, wenn die Pegelsensorinformation einen Abfall des Pegels des Fluids auf einen vorbestimmten Pegel in dem Vorratsbehälter (11) anzeigt, wenn zusätzlich die Partikelsensorinformation einen zulässigen Partikelpegel in dem Fluid am Ausgang des ersten Filters (106) anzeigt, und durch
einen Rückführungspfad (220) von dem Umgehungsventil (204) zu dem ersten Filter (106),
wobei das Umgehungsventil (204) eine dritte Position aufweist, in der das Umgehungsventil (204) eine Fluidverbindung zwischen dem Auslass des ersten Filters (106) und dem Rückführungspfad (220) zu dem ersten Filter (106) bereitstellt,
wobei die Steuerung (212) ausgestaltet ist, die Position des Umgehungsventils (204) in die dritte Position zu steuern, wenn die Pegelsensorinformation einen Abfall des Pegels des Fluids auf den vorbestimmten Pegel im Vorratsbehälter (11) anzeigt und die Partikelsensorinformation einen unzulässigen Partikelpegel in dem Fluid an dem Ausgang des ersten Filters (106) anzeigt.

2. Fluidreinigungssystem (100) nach Anspruch 1, wobei der Auslass des Vorratsbehälters (114) einen Wasserhahn, einen Zapfhahn, eine Zapfstelle oder ein anderes Ventil umfasst, das steuerbar einen Fluss des Fluids aus dem Vorratsbehälter (114) ermöglicht.

3. Fluidreinigungssystem (100) nach einem der Ansprüche 1 bis 2, wobei der zweite Filter (110) einen zweiten Auslass (116) aufweist, über den Salzlösung den Umkehrosmosefilter verlässt.

4. Fluidreinigungssystem (100) nach einem der Ansprüche 1 bis 3, wobei der Partikelfilter Kohlenstoffpartikel, um Chlor und Chloramine aus dem Fluid durch Adsorption zu entfernen, und ein Additiv, um gelöste Feststoffe aus dem Fluid zu entfernen, umfasst, und
wobei der Umkehrosmosefilter eine poröse Membran umfasst, durch die Fluid von dem Einlass des zweiten Filters (110) zu dem Auslass des zweiten Filters (110) verläuft.

5. Fluidreinigungssystem (100) nach einem der Ansprüche 1 bis 4, wobei das Fluid Wasser ist.

## Revendications

1. Système de purification de fluide (100) comprenant :
un premier filtre (106) comprenant un filtre à particules, et ayant une entrée et une sortie ;
un second filtre (110) comprenant un filtre à osmose inverse, et ayant une entrée et au moins une première sortie ;
un réservoir (114) pour contenir du fluide, le réservoir (114) ayant une entrée et une sortie ;
une soupape de dérivation (204) positionnée entre la sortie du premier filtre (106), l'entrée du second filtre (110) et l'entrée du réservoir (114), et ayant une première position dans laquelle la soupape de dérivation (204) fournit une communication fluidique entre la sortie du premier filtre (106) et l'entrée du second filtre (110), et ayant une deuxième position dans laquelle la soupape de dérivation (204) fournit une communication fluidique entre la sortie du premier filtre (106) et l'entrée du réservoir (114), contournant l'entrée du second filtre (110) ; et
un dispositif de commande (212) commandant la position de la soupape de dérivation (204) entre au moins la première position et la deuxième position ;
un capteur de niveau (208, 210) monté sur ou dans le réservoir (114) et configuré pour mesurer un niveau du fluide dans le réservoir (11), dans lequel le capteur de niveau (208, 210) est en communication avec le dispositif de commande (212) et
**caractérisé en ce que**
des informations de capteur de niveau fournies par le capteur de niveau (208, 210) au dispositif de commande (212) détermine si la soupape de dérivation (204) est dans la première position ou la deuxième position,
dans lequel le dispositif de commande (212) est configuré pour commander la position de la soupape de dérivation (204) à la deuxième position si les informations de capteur de niveau indiquent une chute du niveau du fluide à un niveau prédéterminé dans le réservoir (11) et commander autrement la position de la soupape de dérivation (204) à la première position et par
un capteur de particules (218) en communication avec le dispositif de commande (212),
dans lequel le capteur de particules (218) est conçu pour surveiller un niveau de particules dans le fluide à la sortie du premier filtre (106) et dans lequel des informations de capteur de particules fournies par le capteur de particules (218) au dispositif de commande (212) en plus des informations de capteur de niveau déterminent si la soupape de dérivation (204) est dans la première position ou la deuxième position,
dans lequel le dispositif de commande (212) est configuré pour commander la position de la soupape de dérivation (204) à la deuxième position si les informations de capteur de niveau indiquent une chute du niveau du fluide à un niveau prédéterminé dans le réservoir (11) uniquement si les informations de capteur de particules indiquent un niveau de particules acceptable dans le fluide au niveau de la sortie du premier filtre (106), et par un chemin de retour (220) de la soupape de dérivation (204) vers le premier filtre (106),et
dans lequel la soupape de dérivation (204) a une troisième position dans laquelle la soupape de dérivation (204) fournit une communication fluidique entre la sortie du premier filtre (106) et le chemin de retour (220) au premier filtre (106),
dans lequel le dispositif de commande (212) est configuré pour commander la position de la soupape de dérivation (204) à la troisième position si l'information de capteur de niveau indique une chute du niveau du fluide au niveau prédéterminé dans le réservoir (11) et les informations de capteur de particules indiquent un niveau de particules inacceptable dans le fluide à la sortie du premier filtre (106).

2. Système de purification de fluide (100) selon la revendication 1, dans lequel la sortie du réservoir (114) comprend un robinet, un bout uni, un trou taraudé ou une autre soupape qui permet de manière commandée un écoulement du fluide depuis le réservoir (114).

3. Système de purification de fluide (100) selon l'une quelconque des revendications 1 à 2, le second filtre (110) ayant une seconde sortie (116) par l'intermédiaire de laquelle la saumure sort du filtre à osmose inverse.

4. Système de purification de fluide (100) selon l'une quelconque des revendications 1 à 3, dans lequel le filtre à particules comprend des particules de carbone pour éliminer le chlore et les chloramines du fluide par adsorption, et un additif pour éliminer les solides dissous du fluide, et
dans lequel le filtre à osmose inverse comprend une membrane poreuse à travers laquelle un fluide passe de l'entrée du second filtre (110) à la sortie du second filtre (110).

5. Système de purification de fluide (100) selon l'une quelconque des revendications 1 à 4, dans lequel le fluide est de l'eau.
